# EUROPÄISCHE PATENTSCHRIFT

(11) **EP 2 532 416 B1**
(45) Veröffentlichungstag und Bekanntmachung des Hinweises auf die Patenterteilung: **24.02.2016**
(21) Anmeldenummer: 12167413.9
(22) Anmeldetag: 10.05.2012
(51) Int. Cl.: B01D 53/50, B01D 53/34

(54) **Rauchgasentschwefelung mit Wassergewinnungsmöglichkeit**
Removal of sulphur from flue gas with possibility of recovering water
Désulfurisation de gaz de fumée avec possibilité de récupération d'eau

(30) Priorität: 10.06.2011 DE 102011051022
(43) Veröffentlichungstag der Anmeldung: 12.12.2012
(73) Patentinhaber: Mitsubishi Hitachi Power Systems Europe GmbH, 47059 Duisburg (DE)
(72) Erfinder: BUDDENBERG, Torsten, 47447 Moers (DE); PAPENHEIM, Georg, 47647 Kerken (DE); STREIBER, Sven, 47249 Duisburg (DE)
(74) Vertreter: Viering, Jentschura & Partner mbB Patent- und Rechtsanwälte

(56) Entgegenhaltungen:
- DE-A1-102007 043 331
- US-A- 4 194 889

## Beschreibung

Die Erfindung richtet sich auf eine Rauchgasbehandlungsanlage umfassend eine Rauchgasentschwefelungsanlage mit zugeordnetem, als Sprühwäscher ausgebildetem, und bezüglich der Rauchgasführung der Rauchgasentschwefelungsanlage nachgeschaltetem Rauchgaskühler, der in eine entschwefeltes Rauchgas führende Leitungsverbindung mit der Rauchgasentschwefelungsanlage bringbar ist und einen angeschlossenen Kühlwasserkreislauf aufweist, wobei in dem Kühlwasserkreislauf ein Kühlturm angeordnet ist und der Kühlwasserkreislauf mit der Rauchgasentschwefelungsanlage in Leitungsverbindung steht.

Weiterhin richtet sich die Erfindung auf ein Rauchgasbehandlungsverfahren, bei welchem das Rauchgas in einer Rauchgasentschwefelungsanlage unter Zusatz von Prozesswasser entschwefelt wird und nachfolgend in Abhängigkeit von einem aus jeweils alternativ einstellbaren Betriebsmodi ausgewählten Betriebsmodus in einem Rauchgaskühler mittels Kühlwasser gekühlt wird, wobei das Kühlwasser in einem Kühlwasserkreislauf mit darin angeordnetem Kühlturm gekühlt und dem Rauchgaskühler und/oder der Rauchgasentschwefelungsanlage zugeführt wird.

Unter anderem in konventionellen, fossil befeuerten Kraftwerken werden Rauchgasentschwefelungsanlagen (REA) eingesetzt. In diesen Rauchgasentschwefelungsanlagen wird das Rauchgas einer Behandlung mit einem schwefelbindenden Absorptionsmittel ausgesetzt. Bei diesem Absorptionsmittel kann es sich um eine kalksteinhaltige Suspension handeln, wobei der Kalkstein überwiegend aus Calciumcarbonat (CaCO₃) besteht. Diese so genannte Kalkwäsche hat sich als nicht regeneratives Verfahren weltweit am meisten durchgesetzt. Bei diesem Verfahren wird der Rauchgasentschwefelungsanlage zusätzlich zu der Kalksteinsuspension Prozesswasser im Gegenstromwäscher der Rauchgasentschwefelungsanlage im Gegenstrom zu dem darin aufsteigenden Rauchgas zugeführt. In Abhängigkeit von der Größe des der Rauchgasentschwefelungsanlage zugeordneten Dampferzeugers, des verwendeten Brennstoffs sowie des Lastbereiches werden beim Betrieb der Rauchgasentschwefelungsanlage zwar unterschiedliche, aber immer erhebliche Mengen an Prozesswasser benötigt. Das benötige Prozesswasser wird durch externe Leitungen zugeführt, wobei häufig auch Brunnenwasser als Prozesswasserquelle dient. In wasserreichen Gebieten stellt die Versorgung einer Rauchgasentschwefelungsanlage mit Prozesswasser kein großes Problem dar. Werden ein Kraftwerk und eine diesem zugeordnete Rauchgasentschwefelungsanlage allerdings in einem Gebiet errichtet, welches wasserarm und ohne große regionale Wasserreserven ist, muss zur Sicherstellung des Bedarfes an Prozesswasser dieses gegebenenfalls über große Entfernungen, beispielsweise mittels einer Pipeline, bereitgestellt werden. Die Errichtung und der Unterhalt einer Pipeline sind jedoch je nach Größe und Länge mit hohen Investitions-, Betriebs- und Wartungskosten verbunden. Des Weiteren ist in politisch unsicheren Gebieten ein Wasserdiebstahl durch Anzapfen der Pipeline oder Sabotage an der errichteten Pipeline zu befürchten. Dies kann den Betrieb des Kraftwerkes einschränken oder gar stoppen.

Aus dem Stand der Technik, beispielsweise der DE 10 2007 043 331 A1, ist es bekannt, einer Rauchgasentschwefelungsanlage einen Rauchgaswäscher nachzuschalten, in welchem das Rauchgas mittels eines zugeführten kühlen Waschmediums gekühlt wird. Das Waschmedium wird aus dem Rauchgaswäscher abgezogen, über einen Wärmetauscher geführt und im Kreislauf in den Rauchgaswäscher rückgeführt. Ein Teil des Waschmediums kann auch der vorgeschalteten Rauchgasentschwefelungsanlage zugeführt werden.

Der Erfindung liegt die Aufgabe zugrunde, eine Lösung zu schaffen, die eine Kühl- und Prozesswasser sparende und Kühl- und Prozesswasser rückgewinnende Rauchgasentschwefelung ermöglicht.

Bei einer Rauchgasbehandlungsanlage der eingangs näher bezeichneten Art wird diese Aufgabe gemäß Vorrichtungsanspruch 1 gelöst

Bei einem Rauchgasbehandlungsverfahren der eingangs näher bezeichneten Art wird diese Aufgabe erfindungsgemäß gemäß Verfahrensanspruch 4 gelöst

Weitere zweckmäßige Ausgestaltungen und vorteilhafte Weiterbildungen der Erfindung sind Gegenstand der jeweiligen Unteransprüche.

Mit der der Erfindung zugrunde liegenden Grundidee ist eine Kühl- und Prozesswasser sparende sowie Kühl- und Prozesswasser rückgewinnende Rauchgasentschwefelung möglich. Bei entsprechender Dimensionierung des Wasserreservoirs ist eine autarke Rauchgasentschwefelung zu jedem Betriebszeitpunkt der Rauchgasentschwefelung, d. h. zu jeder Jahreszeit, mittels eines jeweiligen Betriebsmodus möglich. Erreicht wird dies durch eine effektive Nutzung und Ausgestaltung der Kühlungskapazität. In Zeiträumen mit kühleren Umgebungstemperaturen wird bei der Kühlung des Rauchgases in dem Rauchgaskühler durch Auskondensation aus dem Rauchgas ein Kreislaufkühlwasserüberschuss generiert, der in dem Wasserreservoir (zwischen)gespeichert wird. In Zeiten höherer, d. h. wärmerer Umgebungstemperaturen, wird dann der Kühlwasserkreislauf mit zusätzlichem Wasser aus dem Wasserreservoir gespeist und ergänzt und dadurch ein ausreichend hoher Kühlwassermassenstrom sowohl der Rauchgasentschwefelungsanlage als auch dem Rauchgaskühler zugeführt.

Hierbei erfolgt die Schaltung in dem jeweiligen Betriebsmodus jahreszeit- und/oder tageszeitabhängig in Abhängigkeit von der zur Kühlung zur Verfügung stehenden Umgebungstemperatur.

Zweckmäßigerweise ist die erfindungsgemäße Rauchgasbehandlungsanlage daher mit einem geschlossenen, luftgekühlten System zur Kühlung des Kühlwasserkreislaufwassers oder Prozesswassers ausgestattet. Die Erfindung sieht daher in Ausgestaltung vor, dass der Kühlturm oder der Wärmetauscher eine Trockenkühlung für das Kühlwasserkreislaufwasser ausbildet. Ebenso ist gemäß Ausgestaltung der Erfindung vorgesehen, dass der Kühlturm oder der Wärmetauscher eine Luftkühlung mit indirekter Wärmeübertragung auf das Kühlkreislaufwasser aufweist.

Um im Rauchgaskühler eine ausreichende (Aus)-Kondensation von Wasser aus dem Rauchgas zu erzielen, ist es gemäß Weiterbildung der Erfindung von Vorteil, dass der Rauchgaskühler eine das Rauchgas auf eine Temperatur unterhalb der Rauchgasentschwefelungsanlagenaustrittstemperatur kühlende Kühlkapazität aufweist.

Um je nach Jahreszeit und/oder Tageszeit und sich jeweils einstellender äußerer Umgebungstemperatur unterschiedliche Betriebsmodi hinsichtlich der Rauchgasführung und/oder der Kreislaufwasser- oder Prozesswasserführung realisieren zu können, zeichnet sich die Rauchgasbehandlungsanlage weiterhin dadurch aus, dass in der Leitungsverbindung eine erste regelbare Kühlwasserverteilung des Kreislaufkühlwassers ausgebildet ist, die das Kreislaufwasser in eine in das Wasserreservoir führende Wasserreservoirzuleitung und/oder in eine zur Rauchgasentschwefelungsanlage führende Kühlwasser- oder Prozesswasserzuführleitung und/oder in eine mit dem Rauchgaskühler in Leitungsverbindung stehende Verbindungsleitung verteilt. Durch die in dem Kühlwasserkreislauf ausgebildete und angeordnete regelbare Verteilung des Kreislaufkühlwassers kann dieses je nach Steuerung oder Regelung einem oder mehreren der Elemente Wasserreservoir, Rauchgasentschwefelungsanlage und Rauchgaskühler gezielt zugeführt werden.

Hierbei ist die Ausbildung einer weiteren regelbaren Verteilung des Kühlwassers von Vorteil, mit der sich auch eine Regelung von dem Wasserreservoir entnommenem Kühl- oder Prozesswasser realisieren lässt. Die Erfindung sieht daher in weiterer Ausgestaltung der Rauchgasbehandlungsanlage vor, dass in der Leitungsverbindung eine zweite regelbare Kühlwasserverteilung ausgebildet ist, die Kühlwasser von einer mit dem Wasserreservoir in Leitungsverbindung stehenden Wasserreservoirentnahmeleitung in die zur Rauchgasentschwefelungsanlage führende Kühlwasser- oder Prozesswasserzuführleitung und/oder in die mit dem Rauchgaskühler in Leitungsverbindung stehende Verbindungsleitung verteilt.

Um in Abhängigkeit von dem jeweils einzustellenden Betriebsmodus auch die Möglichkeit vorzusehen, das die Rauchgasentschwefelungsanlage verlassende Rauchgas an dem Rauchgaskühler vorbei strömen zu lassen, ist es gemäß weiterer Ausgestaltung der Erfindung zweckmäßig und vorteilhaft, dass in der entschwefeltes Rauchgas führenden Leitungsverbindung eine regelbare Rauchgasverteilung des Rauchgases ausgebildet ist, die das Rauchgas in eine zum Rauchgaskühler führende Rauchgaszuführleitung und/oder in eine nicht zum Rauchgaskühler führende Rauchgasabführleitung verteilt.

Da es mit der erfindungsgemäßen Rauchgasbehandlungsanlage bei entsprechender Dimensionierung des Wasserreservoirs möglich ist, diese autark von jeder externen Kühl- oder Prozesswasserzuführung zu betreiben, sieht die Erfindung ferner vor, dass die Rauchgasbehandlungsanlage keine externe oder zusätzliche Prozesswasser- und/oder Kühlwasserzuführung aufweist. Dies ist dann möglich, wenn die maximale Aufnahmekapazität des Wasserreservoirs so ausgelegt ist, dass es die in Zeiten höherer Umgebungstemperatur dem Kühlkreislaufwasser zuzugebende Kühl- oder Prozesswassermenge enthält und abgeben kann. Die maximale Speicherkapazität ist also auf die für den jeweiligen Zeitraum des Jahres benötigte maximale Wasserreserve ausgelegt.

Wie vorstehend dargelegt, liegt die dem Rauchgasbehandlungsverfahren zugrunde liegende Grundidee darin, in dem Kühlwasserkreislauf des Kühl- oder Prozesswassers stromabwärts des Wärmetauschers oder Kühlturms ein Wasserreservoir anzuordnen und in Abhängigkeit vom jeweils ausgewählten Betriebsmodus, der jeweils von den äußeren Umgebungstemperaturen abhängt, dem Wasserreservoir gekühltes Kreislaufkühlwasser zuzuführen und/oder dem Wasserreservoir Kreislaufkühlwasser zu entnehmen und als Kühl- oder Prozesswasser der Rauchgasentschwefelungsanlage und/oder dem Rauchgaskühler zuzuführen. Hierdurch wird bei ausreichend kühler Umgebungstemperatur dem Rauchgas dadurch, dass es auf eine unterhalb der Rauchgasentschwefelungsanlagenaustrittstemperatur liegende Temperatur gekühlt wird, mehr Wasser durch Kondensation entzogen, als es für das eigentliche Rauchgasentschwefelungsverfahren notwendig wäre. Dieses im Vergleich zu üblichen Anlagen zusätzlich entzogene und gewonnene Wasser wird in dem Wasserreservoir zwischengespeichert und in Zeiten höherer äußerer Umgebungstemperatur als Kühl- oder Prozesswasser dem Kühlwasserkreislauf oder der Entschwefelungsanlage wieder zugeführt.

Im Rahmen der verschiedenen, aus einer Mehrzahl von Betriebsmodi auswählbaren Betriebszustände und Verfahrenszustände sieht die Erfindung vor, dass ein erster Betriebsmodus darin besteht, dass das entschwefelte Rauchgas dem Rauchgaskühler zugeführt wird und aus dem Rauchgaskühler aufgeheiztes Kühlkreislaufwasser dem Kühlturm oder dem Wärmetauscher zugeführt und als gekühltes Kühl- oder Prozesswasser der Rauchgasentschwefelungsanlage und/oder dem Rauchgaskühler und dem Wasserreservoir zugeführt wird.

Ein zweiter, alternativer Betriebsmodus des Rauchgasbehandlungsverfahrens zeichnet sich in Ausgestaltung der Erfindung dadurch aus, dass entschwefeltes Rauchgas dem Rauchgaskühler zugeführt wird und aus dem Rauchgaskühler aufgeheiztes Kühlkreislaufwasser dem Kühlturm oder dem Wärmetauscher zugeführt und als gekühltes Kühl- oder Prozesswasser, vorzugsweise ausschließlich, der Rauchgasentschwefelungsanlage und/oder dem Rauchgaskühler zugeführt wird.

Weiterhin sieht die Erfindung in einem dritten alternativen Betriebsmodus vor, dass das entschwefelte Rauchgas dem Rauchgaskühler zugeführt wird und aus dem Rauchgaskühler aufgeheiztes Kühlkreislaufwasser dem Kühlturm oder dem Wärmetauscher zugeführt und als gekühltes Kühl- oder Prozesswasser der Rauchgasentschwefelungsanlage und/oder dem Rauchgaskühler zugeführt sowie aus dem Wasserreservoir Kreislaufkühlwasser entnommen und der Rauchgasentschwefelungsanlage und/oder dem Rauchgaskühler zugeführt wird.

Schließlich zeichnet sich ein vierter Betriebsmodus dadurch aus, dass das entschwefelte Rauchgas einer nicht zum Rauchgaskühler führenden Rauchgasabführleitung zugeführt sowie aus dem Wasserreservoir Kreislaufkühlwasser entnommen und als (gekühltes) Kühl- oder Prozesswasser der Rauchgasentschwefelungsanlage zugeführt wird.

Die Erfindung ist nachstehend anhand einer Zeichnung beispielhaft näher erläutert. Diese zeigt in
- Fig. 1: in schematischer Darstellung die Gesamtverschaltung einer erfindungsgemäßen Rauchgasentschwefelungsanlage und in
- Fig. 2 - 5: in schematischer Darstellung die Anlagenverschaltung in unterschiedlichen Betriebsmodi.

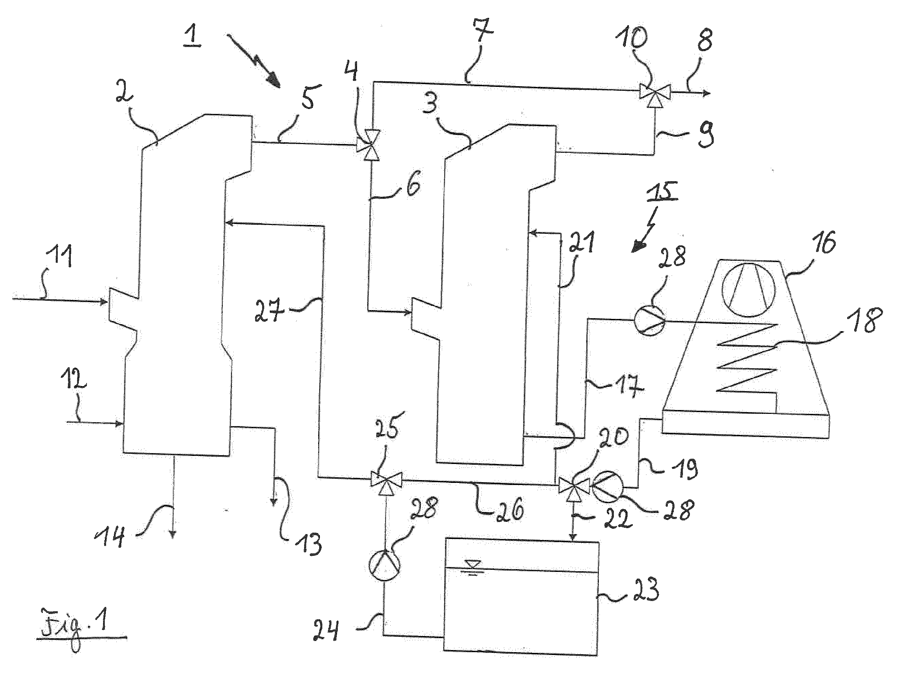

Die Fig. 1 zeigt eine insgesamt mit 1 bezeichnete Rauchgasbehandlungsanlage, die eine in Form eines Gegenstromwäschers ausgebildete Rauchgasentschwefelungsanlage 2 und einen in Form eines Sprühwäschers ausgebildeten Rauchgaskühler 3 umfasst. Rauchgasaustrittsseitig weist die Rauchgasentschwefelungsanlage 2 eine zu einer regelbaren Rauchgasverteilung 4 für das Rauchgas führende Rauchgasleitung 5 auf. Von der regelbaren Rauchgasverteilung 4 führt eine Rauchgaszuführleitung 6 zum Rauchgaskühler 3, in welchen diese einmündet. Eine Rauchgasabführleitung 7 geht in eine zum Kamin führende Abgasleitung 8 über. Rauchgasaustrittsseitig weist der Rauchgaskühler 3 eine Rauchgasleitung 9 auf, die in eine Verteilung 10 einmündet, mittels welcher sie mit der Rauchgasabführleitung 7 und der zum Kamin führenden Abgasleitung 8 in Leitungsverbindung steht. Über eine in die Rauchgasentschwefelungsanlage 2 einmündende Rauchgaszuleitung 11 wird das von der Brennkammer bzw. dem Dampferzeuger eines fossil befeuerten Kraftwerks stammende Rauchgas, nachdem es einen Elektrofilter durchströmt hat, in die Rauchgasentschwefelungsanlage 2 eingeführt. Als Entschwefelungsmedium wird der Rauchgasentschwefelungsanlage im Ausführungsbeispiel eine kalksteinhaltige Flüssigkeit als Absorptionsmittel in Form einer Suspension 12 zugeführt. Aus der Rauchgasentschwefelungsanlage abgeführt werden die sich bei der Entschwefelung mit der Kalksteinsuspension bildende Gipssuspension 13 und Abwasser 14. Der Rauchgaskühler 3 weist einen zugeordneten, insgesamt mit 15 bezeichneten Kühlwasserkreislauf auf. In dem Kühlwasserkreislauf 15 ist ein Kühlturm 16 mit Trockenkühlung für das Kühlwasserkreislaufwasser angeordnet. Dem Kühlturm 16 wird über eine Kühlturmzuleitung 17 aus dem Rauchgaskühler 3 stammendes, nach dem Kontakt mit dem den Rauchgaskühler 3 durchströmenden Rauchgas erwärmtes Kühlwasser oder Prozesswasser zugeführt und dort innerhalb eines Leitungsabschnittes 18 indirekt durch im Kühlturm von unten nach oben entgegenströmende Kühlluft gekühlt. Vom Kühlturm 16 aus strömt das Kühlwasser oder Prozesswasser über eine Kühlturmableitung 19 zu einer ersten regelbaren Kühlwasserverteilung 20. An diese erste regelbare Kühlwasserverteilung ist eine Kühlwasser- oder Prozesswasserrückführleitung 21 angeschlossen, mittels welcher das Kühlwasser oder Prozesswasser gekühlt in den Rauchgaskühler 3 rückführbar ist. Weiterhin ist an der ersten regelbaren Kühlwasserverteilung 20 eine Wasserreservoirzuleitung 22 angeschlossen, mittels welcher gekühltes Kühlwasser oder Prozesswasser in ein Wasserreservoir 23 einleitbar ist. Das Wasserreservoir 23 weist zudem eine Wasserreservoirentnahmeleitung 24 auf, die in eine zweite regelbare Kühlwasserverteilung 25 einmündet. Über eine Verbindungsleitung 26 stehen die erste regelbare Kühlwasserverteilung 20 und die zweite regelbare Kühlwasserverteilung 25 in fluidleitender Verbindung miteinander sowie mit der Kühlwasser- oder Prozesswasserrückführleitung 21. Die zweite regelbare Kühlwasserverteilung 25 ist über eine Kühlwasser- oder Prozesswasserzuführleitung 27 mit der Rauchgasentschwefelungsanlage 2 verbunden. In den verschiedenen Leitungen sind zudem notwendige und übliche und nicht näher erläuterte Pumpen 28 angeordnet.

Die Kühlleistung der Trockenkühlung des Kühlturms 16 ist derart ausgelegt, dass mittels des über die Kühlwasser- oder Prozesswasserrückführleitung 21 dem Rauchgaskühler 3 zugeführten Kühlwassers in dem Rauchgaskühler 3 eine Temperatur des über die jeweilige Rauchgaszuführleitung 6 zuströmenden Rauchgases erreicht und eingestellt wird, die unterhalb der Rauchgasentschwefelungsanlagenaustrittstemperatur liegt, mit welcher das Rauchgas in die Rauchgasleitung 5 einströmt.

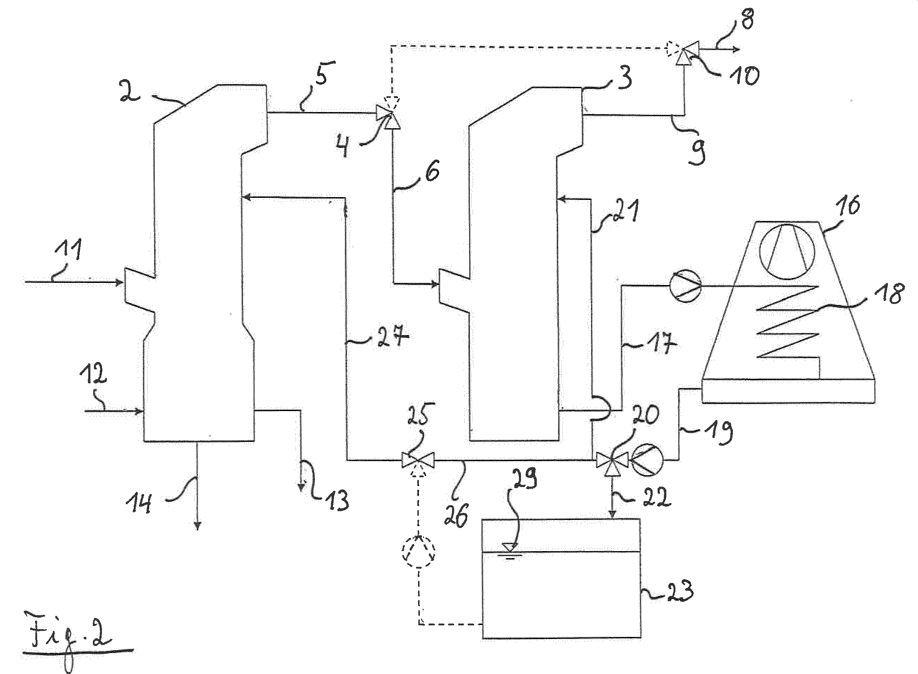

In den Figuren 2 bis 5 sind nun schematisch verschiedene alternative Betriebsmodi und Fahrweisen der Rauchgasbehandlungsanlage 1 dargestellt, wobei die in dem jeweiligen Betriebsmodus nicht genutzten Leitungen oder Anlagenteile oder -elemente gestrichelt dargestellt sind.

Die Fig. 2 zeigt einen als "Abwasserüberversorgung" bezeichneten ersten Betriebsmodus oder Betriebszustand. Dieser wird gefahren, wenn ausreichend kühle Umgebungstemperaturen vorliegen und gegebenenfalls ein geringer oder zu geringer Wasserstand im Wasserreservoir 23 ausgebildet ist. In diesem ersten Betriebsmodus wird das in der Rauchgasentschwefelungsanlage 2 entschwefelte Rauchgas über die Rauchgasleitung 5, die regelbare Rauchgasverteilung 4 und die Rauchgaszuführleitung 6 in den Rauchgaskühler 3 geleitet, bevor es dann durch die Rauchgasleitung 9, und die Verteilung 10 in die Abgasleitung 8 gelangt. Das in dem Rauchgaskühler 3 aufgeheizte Kühlwasser oder Prozesswasser wird bei diesem ersten Betriebsmodus über die Kühlturmzuleitung 17 in den Kühlturm 16 oder Luftkühlturm gepumpt. Dort tritt es im Leitungsabschnitt 18 in einen indirekten Kontakt mit der Umgebungsluft. Das nun (rück)gekühlte Kühlwasser oder Prozesswasser wird mittels der Kühlturmableitung 19 der ersten regelbaren Kühlwasserverteilung 20 zugeführt. Diese ist in diesem ersten Betriebsmodus derart eingestellt, dass sowohl Kühlwasser in die Verbindungsleitung 26 und von dort durch die zweite regelbare Kühlwasserverteilung 25 und die Kühlwasser- oder Prozesswasserzuführleitung 27 in die Rauchgasentschwefelungsanlage 2 geleitet wird als auch Kühlwasser durch die Kühlwasser- oder Prozesswasserrückführleitung 21 dem Rauchgaskühler 3 zugeführt wird. Zudem wird Kühlwasser oder Prozesswasser in die Wasserreservoirzuleitung 22 eingeleitet und mittels dieser Leitung dem Wasserreservoir 23 zugeführt. Bei ausreichend kühlen Umgebungstemperaturen wird dieser Betriebsmodus solange beibehalten, bis das Wasserreservoir bis zu seinem vorgesehenen maximalen Füllstand 29 aufgefüllt ist. Der maximale Füllstand 29 kann an die, für den jeweiligen Zeitraum eines Jahres benötigten Wasserreserven angepasst werden.

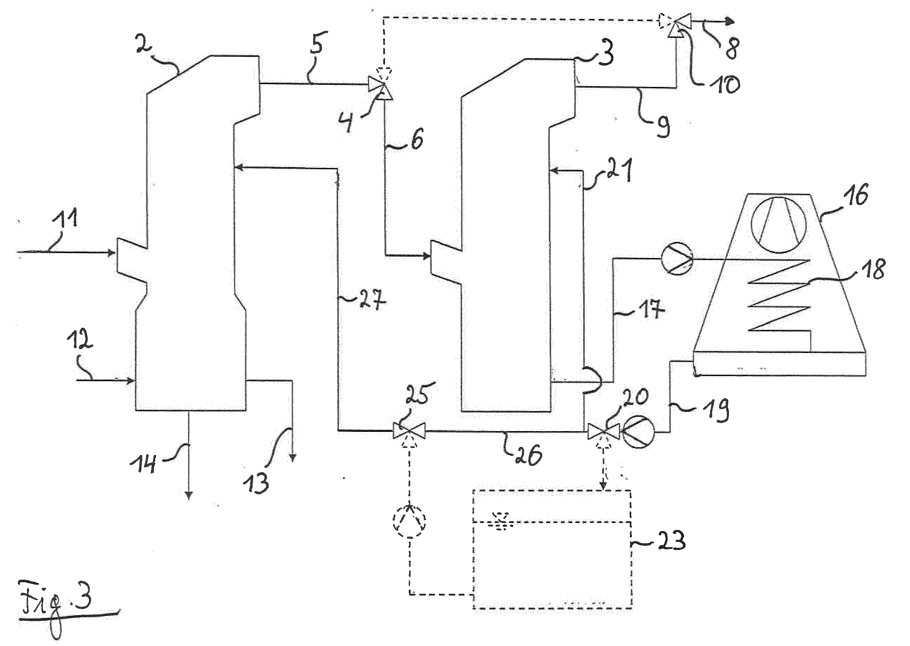

Bei dem in der Fig. 3 dargestellten zweiten Betriebsmodus liegen ausreichend kühle Umgebungstemperaturen und ein ausreichend gefülltes Wasserreservoir 23 vor, so dass letzteres nicht weiter gefüllt werden muss oder kann. In diesem zweiten Betriebsmodus arbeiten die Rauchgasentschwefelungsanlage 2 und der Rauchgaskühler 3 im Gleichgewicht. Das Rauchgas wird wiederum wie bereits im ersten Betriebsmodus von der Rauchgasentschwefelungsanlage 2 dem Rauchgaskühler 3 zugeführt und von diesem in die Abgasleitung 8 eingeleitet. Das erwärmte oder erhitzte Kühlwasser oder Prozesswasser wird wiederum vom Rauchgaskühler 3 dem Kühlturm oder Luftkühlturm 16 zugeführt, dann in der ersten regelbaren Kühlwasserverteilung 20 aber nur noch auf die Leitung 26, die davon abzweigende Kühlwasser- oder Prozesswasserrückführleitung 21 sowie über die zweite regelbare Kühlwasserverteilung 25 der Leitung 27 zugeführt. Hierbei stellt sich insofern ein Gleichgewicht ein, als das rückgekühlte Kühlwasser oder Prozesswasser gleichmäßig oder in einem jeweils gewünschten Verhältnis auf die Kühlwasser- oder Prozesswasserrückführleitung 21 und die Kühlwasser- oder Prozesswasserzuführleitung 27 verteilt wird, so dass der in die Rauchgasentschwefelungsanlage 2 eingeleitete Massenstrom an Kühlwasser oder Prozesswasser gleich dem Massenstrom an erwärmtem Kühlwasser ist, der aus dem Rauchgaskühler 3 über die Kühlturmzuleitung 17 abgezogen wird.

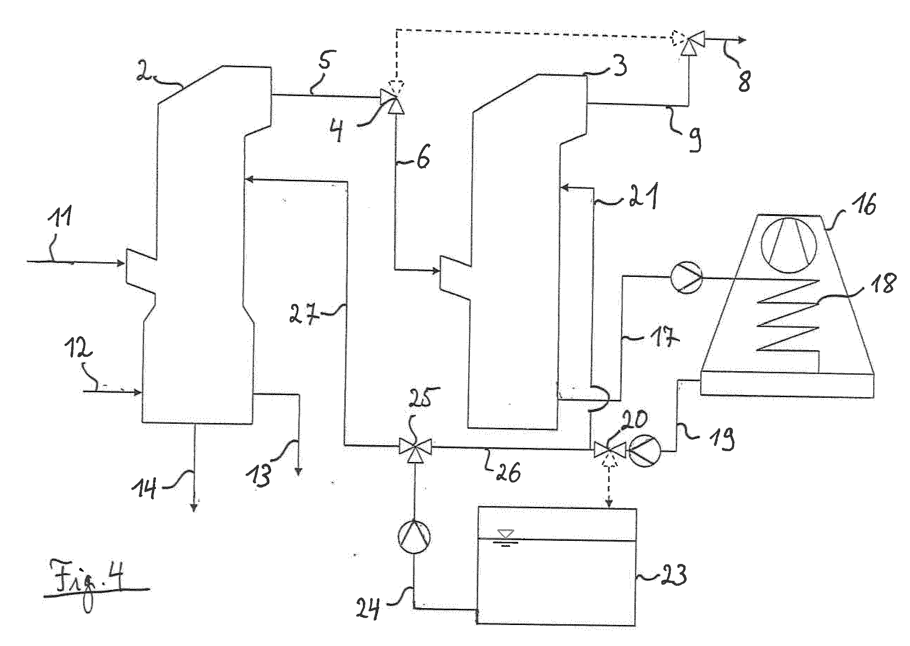

In einem in der Fig. 4 dargestellten dritten Betriebsmodus ist der Betriebszustand einer "Abwasserunterversorgung" dargestellt. Dieser dritte Betriebsmodus stellt sich ein oder wird eingestellt, wenn die Umgebungstemperaturen zu hoch für eine ausreichende oder gewünschte Kühlung des Kühlwassers sind. In diesem dritten Betriebsmodus wird das Rauchgas wie bei den vorhergehend beschriebenen Betriebsmodi von der Rauchgasentschwefelungsanlage 2 in den Rauchgaskühler 3 und von diesem in die Abgasleitung 8 geleitet. Das rückgekühlte Kühlwasser wird wiederum über die Kühlwasser- oder Prozesswasserrückführleitung 21 dem Rauchgaskühler 3 und über die Leitungen 26 und 27 der Rauchgasentschwefelungsanlage 2 zugeführt. Allerdings weist das aus dem Kühlturm 16 oder Luftkühlturm in die Kühlturmableitung 19 einströmende Kühlwasser oder Prozesswasser eine gegenüber insbesondere dem ersten und dem zweiten Betriebsmodus höhere Temperatur auf. Mit dem diese höhere Temperatur aufweisenden Kühlwasser oder Prozesswasser wäre nur eine geringere Masse an Wasser aus dem Rauchgas zu kondensieren. Insbesondere für den Betrieb der Rauchgasentschwefelungsanlage 2 wäre dies nicht ausreichend. Um dennoch eine kontinuierliche Entschwefelung der Rauchgasentschwefelungsanlage 2 zu gewährleisten, ist in diesem dritten Betriebsmodus vorgesehen, dass ein Teil des während früherer Betriebsphasen in anderen Betriebsmodi zuvor gewonnenen, in dem Wasserreservoir 23 gespeicherten Kühlwassers oder Prozesswassers über die Wasserreservoirableitung 24 der zweiten regelbaren Kühlwasserverteilung 25 zugeführt und in die Kühlwasser- oder Prozesswasserzuführleitung 27 oder gewünschtenfalls zusätzlich auch in die Verbindungsleitung 26 eingespeist und dadurch den jeweils angeschlossenen Anlageneinheiten zugeführt wird. Das aus dem Wasserreservoir 23 in das System eingespeiste zusätzliche Kühlwasser oder Prozesswasser gleicht in diesem dritten Betriebsmodus den geringeren entzogenen Massenstrom an Wasser aus dem Rauchgas aus.

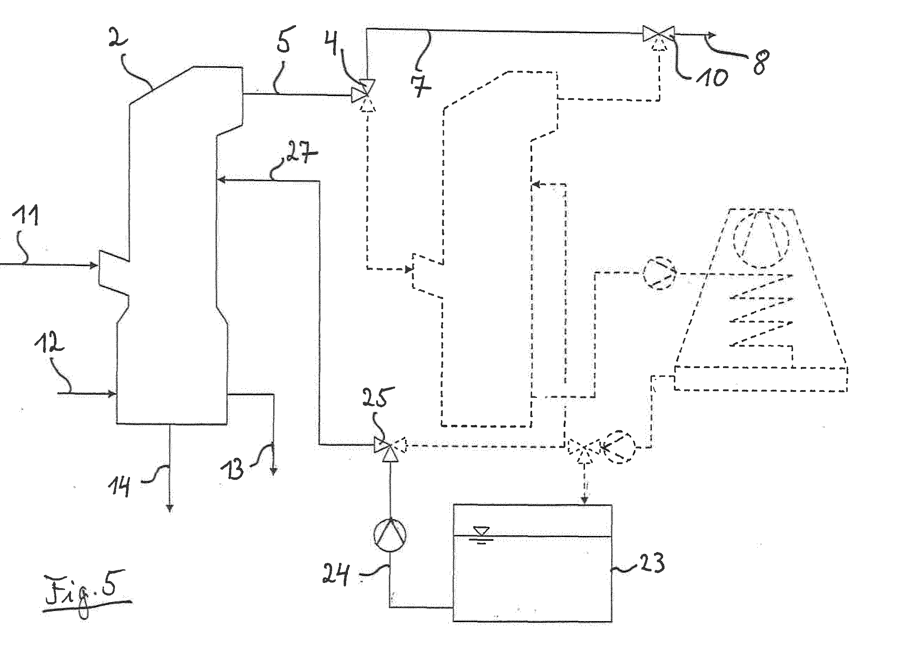

Bei Anwendung eines vierten, in Fig. 5 dargestellten Betriebsmodus liegen so hohe Temperaturen vor, dass eine Kühlung des Prozesswassers oder Kühlwassers nicht möglich ist. In diesem vierten Betriebsmodus strömt das die Rauchgasentschwefelungsanlage 2 verlassende Rauchgas an dem Rauchgaskühler 3 vorbei, indem es in der regelbaren Rauchgasverteilung 4 unmittelbar in die Rauchgasabführleitung 7 eingeleitet und von dort durch die Verteilung 10 hindurch in die Abgasleitung 8 geführt wird. Das in der Rauchgasentschwefelungsanlage 2 benötigte Prozesswasser wird aus dem Wasserreservoir 23 bereitgestellt und über die Wasserreservoirableitung 24, die zweite regelbare Kühlwasserverteilung 25 und die Kühlwasser- oder Prozesswasserzuführleitung 27 in die Rauchgasentschwefelungsanlage 2 eingeleitet. Damit stammt auch in diesem Modus das in der Rauchgasentschwefelungsanlage benötigte Prozesswasser zu 100 % und ausschließlich aus dem Wasserreservoir 23.

Insgesamt ist die Rauchgasbehandlungsanlage 21 darüber hinaus mit keiner weiteren, von extern Kühlwasser oder Prozesswasser zuführenden Fluidleitung verbunden. Das System arbeitet also in Bezug auf das Kühlwasser und Prozesswasser in allen vier Betriebsmodi autark.

Insgesamt wird durch die Erfindung somit eine Rauchgasbehandlungsanlage 1 geschaffen, deren Rauchgasentschwefelungsanlage 2 und deren zugeordneter Rauchgaskühler 3 zusammen beide bezogen auf die Kühlwasser- und/oder Prozesswasserversorgung autark arbeiten und betrieben werden können. Es ist keine externe Zuführung von Kühlwasser oder Prozesswasser, beispielsweise mittels einer Pipeline, notwendig, so dass die eingangs erwähnten Probleme und die damit verbundenen Kosten entfallen. Das benötigte Kühlwasser oder Prozesswasser wird anlagen-autark bereitgestellt und (rück)gekühlt.

## Patentansprüche

1. Rauchgasbehandlungsanlage (1) umfassend eine Rauchgasentschwefelungsanlage (2) mit zugeordnetem, als Sprühwäscher ausgebildetem und bezüglich der Rauchgasführung der Rauchgasentschwefelungsanlage (2) nachgeschaltetem Rauchgaskühler (3), der in eine entschwefeltes Rauchgas führende Leitungsverbindung (5,6) mit der Rauchgasentschwefelungsanlage (2) bringbar (4) ist und einen angeschlossenen Kühlwasserkreislauf (15) aufweist, wobei das Prozess- oder Kühlwasser des Kühlwasserkreislaufs (15) mit dem den Rauchgaskühler (3) durchströmenden Rauchgas in Kontakt bringbar ist und ein durch Auskondensation aus dem Rauchgas generierter Kreislaufwasserüberschuss gekühlt in einem aus dem Kühlwasserkreislauf (15) gespeisten Wasserreservoir (23) gespeichert werden kann, das mit dem Kühlwasserkreislauf (15) und der Rauchgasentschwefelungsanlage (2) in eine Prozess- und/oder Kühlwasser einspeisende Leitungsverbindung (24, 26, 27) bringbar ist, und wobei in dem Kühlwasserkreislauf (15) ein Kühlturm (16) angeordnet ist und der Kühlwasserkreislauf (15) mit der Rauchgasentschwefelungsanlage (2) in Leitungsverbindung (26, 27) bringbar ist,
**dadurch gekennzeichnet,**
**dass** der Kühlturm (16) eine Luftkühlung mit indirekter Wärmeübertragung auf das Kühlkreislaufwasser aufweist und das Wasserreservoir (23) strömungsabwärts des Kühlturms (16) angeordnet ist und dass in der Leitungsverbindung (26, 27) eine erste regelbare Kühlwasserverteilung (20) des Kreislaufkühlwassers ausgebildet ist, die das vom Kühlturm kommende Kreislaufkühlwasser in Abhängigkeit von einem aus jeweils alternativ einstellbaren Betriebsmodi der Rauchgasbehandlungsanlage (1) ausgewählten Betriebsmodus, in welchen die Rauchgasbehandlungsanlage (1) jahreszeit- und/oder tageszeitabhängig in Abhängigkeit von der zur Kühlung zur Verfügung stehenden Umgebungstemperatur betrieben wird, in eine in das Wasserreservoir (23) führende Wasserreservoirzuleitung (22) und/oder in die zur Rauchgasentschwefelungsanlage (2) führende Leitungsverbindung (26, 27) und/oder in eine mit dem Rauchgaskühler (3) in Leitungsverbindung stehende Verbindungsleitung (21, 26) verteilen kann und dass in der Leitungsverbindung (26, 27) eine zweite regelbare Kühlwasserverteilung (25) ausgebildet ist, die in Abhängigkeit von einem aus jeweils alternativ einstellbaren Betriebsmodi der Rauchgasbehandlungsanlage (1) ausgewählten Betriebsmodus, in welchen die Rauchgasbehandlungsanlage (1) jahreszeit- und/oder tageszeitabhängig in Abhängigkeit von der zur Kühlung zur Verfügung stehenden Umgebungstemperatur betrieben wird, Kühlwasser von einer mit dem Wasserreservoir (23) in Leitungsverbindung stehenden Wasserreservoirentnahmeleitung (24) in die zur Rauchgasentschwefelungsanlage (2) führende Kühlwasser- oder Prozesswasserzuführleitung (27) und/oder in die mit dem Rauchgaskühler (3) in Leitungsverbindung stehende Verbindungsleitung (26) verteilen kann .

2. Rauchgasbehandlungsanlage (1) nach Anspruch 1, **dadurch gekennzeichnet, dass** in der entschwefeltes Rauchgas führenden Leitungsverbindung (5, 6) eine regelbare Rauchgasverteilung (4) ausgebildet ist, die das Rauchgas in eine zum Rauchgaskühler (3) führende Rauchgaszuführleitung (6) und/oder in eine nicht zum Rauchgaskühler (3) führende Rauchgasabführleitung (7) verteilt.

3. Rauchgasbehandlungsanlage (1) nach Anspruche 1 oder 2, **dadurch gekennzeichnet, dass** sie keine externe oder zusätzliche Prozesswasser- und/oder Kühlwasserzuführung aufweist.

4. Rauchgasbehandlungsverfahren, bei welchem Rauchgas mittels einer Rauchgasbehandlungsanlage (1) nach einem der Ansprüche 1 bis 3 behandelt wird, wobei das Rauchgas in der Rauchgasentschwefelungsanlage (2) unter Zusatz von Prozesswasser entschwefelt wird und nachfolgend an dem als Sprühwäscher ausgebildeten Rauchgaskühler vorbeigeführt wird oder nachfolgend in dem als Sprühwäscher ausgebildeten Rauchgaskühler (3) mittels Kühlwasser gekühlt wird, wobei das Kühlwasser in einem Kühlwasserkreislauf (15), der mit der Rauchgasentschwefelungsanlage (2) und dem Rauchgaskühler (3) in Leitungsverbindung (26, 27) steht, mittels eines im Kühlkreislauf (15) angeordneten Kühlturms (16) durch von unten nach oben entgegenströmende Kühlluft indirekt gekühlt wird und dem Rauchgaskühler (3) und/oder der Rauchgasentschwefelungsanlage (2) zugeführt wird, wobei das Prozess- oder Kühlwasser in Kontakt mit dem den Rauchgaskühler (3) durchströmenden Rauchgas kommt und ein durch Auskondensation aus dem Rauchgas generierter Kreislaufkühlwasserüberschuss gekühlt in einem Wasserreservoir (23) gespeichert wird, das mit dem Kühlwasserkreislauf (15) und der Rauchgasentschwefelungsanlage (2) in eine Prozess- oder Kühlwasser einspeisende Leitungsverbindung (24, 26, 27) bringbar ist, wobei in Abhängigkeit vom einem aus jeweils alternativ einstellbaren Betriebsmodi der Rauchgasbehandlungsanlage (1), in welchen die Rauchgasbehandlungsanlage (1) jahreszeit- und/oder tageszeitabhängig in Abhängigkeit von der zur Kühlung zur Verfügung stehenden Umgebungstemperatur betrieben wird, ausgewählten Betriebsmodus in Zeiten kühlerer Umgebungstemperaturen der durch Auskondensation aus dem Rauchgas generierte Kreislaufkühlwasserüberschuss dem in dem Kühlwasserkreislauf (15) strömungsabwärts des Kühlturms (16) angeordneten und aus dem Kühlwasserkreislauf (15) gespeisten Wasserreservoir (23) gekühlt zugeführt und in dem Wasserreservoir (23) gespeichert wird und/oder das in dem Kühlturm (16) gekühlte Kühlwasser des Kühlwasserkreislaufs (15) der Rauchgasentschwefelungsanlage (2) und dem Rauchgaskühler (3) zugeführt wird sowie in Zeiten wärmerer Umgebungstemperaturen der Kühlkreislauf (15) mit aus dem Wasserreservoir (23) entnommenem gespeichertem Kreislaufkühlwasser zusätzlich gespeist wird, das als Kühl- oder Prozesswasser der Rauchgasentschwefelungsanlage (2) und/oder dem Rauchgaskühler (3) zugeführt wird.

5. Rauchgasbehandlungsverfahren nach Anspruch 4, **dadurch gekennzeichnet, dass** in einem ersten Betriebsmodus der alternativen Betriebsmodi das entschwefelte Rauchgas dem Rauchgaskühler (3) zugeführt wird und aus dem Rauchgaskühler (3) aufgeheiztes Kühlkreislaufwasser dem Kühlturm (16) zugeführt und als gekühltes Kühl- oder Prozesswasser der Rauchgasentschwefelungsanlage (2) und dem Rauchgaskühler (3) und dem Wasserreservoir (23) zugeführt wird.

6. Rauchgasbehandlungsverfahren nach Anspruch 4, **dadurch gekennzeichnet, dass** in einem zweiten Betriebsmodus der alternativen Betriebsmodi das entschwefelte Rauchgas dem Rauchgaskühler (3) zugeführt wird und aus dem Rauchgaskühler (3) aufgeheiztes Kühlkreislaufwasser dem Kühlturm (16) zugeführt und als gekühltes Kühl- oder Prozesswasser der Rauchgasentschwefelungsanlage (2) und/oder dem Rauchgaskühler (3) zugeführt wird.

7. Rauchgasbehandlungsverfahren nach Anspruch 4, **dadurch gekennzeichnet, dass** in einem dritten Betriebsmodus der alternativen Betriebsmodi das entschwefelte Rauchgas dem Rauchgaskühler (3) zugeführt wird und aus dem Rauchgaskühler (3) aufgeheiztes Kühlkreislaufwasser dem Kühlturm (16) zugeführt und als gekühltes Kühl- oder Prozesswasser der Rauchgasentschwefelungsanlage (2) und/oder dem Rauchgaskühler (3) zugeführt wird sowie aus dem Wasserreservoir (23) gespeichertes Kreislaufkühlwasser entnommen und der Rauchgasentschwefelungsanlage (2) und/oder dem Rauchgaskühler (3) zugeführt wird.

8. Rauchgasbehandlungsverfahren nach Anspruch 4, **dadurch gekennzeichnet, dass** bei Vorliegen so hoher Temperaturen, dass eine Kühlung des Kreislaufwassers in dem Kühlturm (16) nicht möglich ist, in einem vierten Betriebsmodus der alternativen Betriebsmodi das entschwefelte Rauchgas einer nicht zum Rauchgaskühler (3) führenden Rauchgasabführleitung (7) zugeführt wird und aus dem Wasserreservoir (23) gespeichertes Kreislaufkühlwasser entnommen und als Kühl- oder Prozesswasser der Rauchgasentschwefelungsanlage (2) zugeführt wird.

## Claims

1. Flue gas treatment plant (1), comprising a flue gas desulphurisation plant (2) with associated flue gas cooler (3) designed as a spray washer and located downstream of the flue gas path of the flue gas desulphurisation plant (2), which can be brought (4) into a pipework connection (5, 6), conveying desulphurised flue gas, with the flue gas desulphurisation plant (2) and comprises a connected cooling water cycle (15), wherein the process or cooling water of the cooling water cycle (15) can be brought into contact with the flue gas cooler (3), through which flue gas flows
and wherein a
cycle water excess cooled by condensation generated from the flue gas can be cooled in a water reservoir (23) supplied by the cooling water cycle (15),
and can be brought into contact with the cooling water cycle (15) and
the flue gas desulphurisation plant (2) forms a process and/or cooling water supplying pipework connection (24, 26, 27), and wherein a cooling tower (16) is located in the cooling water cycle (15), and the cooling water cycle (15) can be brought into pipework connection (26, 27) contact with the flue gas desulphurisation plant (2),
**characterised in that**,
the cooling tower (16) comprises air cooling with indirect heat transfer to the cooling cycle water, and **in that** the water reservoir (23) is located downstream from the cooling tower (16), and **in that**
a first controllable cooling water distribution (20) of the cycle cooling water takes place in the pipework connection (26 , 27), which can distribute the cycle cooling water coming from the cooling tower depending on an operating mode of the flue gas treatment plant (1), selected from relevant alternatively adjustable operating modes, in which the flue gas treatment plant (1) is operated depending on the season and/or time of day and the ambient temperature available for cooling in a water reservoir supply (22) leading to the water reservoir (23) and/or in the pipework connection (26, 27) leading to the flue gas desulphurisation plant (2) and/or in a connection line (21, 26) in pipework connection with the flue gas cooler (3),
and **in that**
a second controllable cooling water distribution (25) takes place in the pipework connection (26, 27), which can distribute the cycle cooling water coming from a water reservoir outlet line (24) in pipework connection with the water reservoir (23), depending on an operating mode of the flue gas treatment plant (1) selected from relevant alternatively adjustable operating modes, in which the flue gas treatment plant (1) is operated depending on the season and/or time of day and the ambient temperature available for cooling, in a cooling water or process water supply line (27) leading to the flue gas desulphurisation plant (2) and/or in the connection line (26) in pipework connection with the flue gas cooler (3).

2. Flue gas treatment plant (1) according to claim 1, **characterised in that** a controllable flue gas distribution (4) takes place in the pipework connection (5, 6) conveying desulphurised flue gas, which distributes the flue gas in a flue gas supply line (6) leading to the flue gas cooler (3) and/or in a flue gas outlet line (7) that does not lead to the flue gas cooler (3).

3. Flue gas treatment plant (1) according to claims 1 or 2, **characterised in that** the same comprises no external or additional process water and/or cooling water supply.

4. Flue gas treatment method, with which flue gas is treated by means of a flue gas treatment plant (1) according to one of the claims 1 to 3, wherein the flue gas is desulphurised in the flue gas desulphurisation plant (2) under addition of process water, and subsequently routed past the flue gas cooler designed as a spray washer, or
is subsequently cooled in the flue gas cooler (3) designed as a spray washer by means of cooling water, wherein the cooling water is in pipework connection (26, 27) with a cooling water cycle (15) connected with the flue gas desulphurisation plant (2), and the flue gas cooler (3) is cooled indirectly by means of a cooling tower (16) located in the cooling cycle (15) by cooling air flowing towards it from bottom to top, and is supplied to the flue gas cooler (3) and/or the flue gas desulphurisation plant (2), wherein the process or cooling water comes into contact with the flue gas flowing through the flue gas cooler (3), and a cycle cooling water excess generated by condensating from the flue gas is cooled and stored in a water reservoir (23) that can be brought into a pipework connection (24, 26, 27) supplying the cooling water cycle (15) and the flue has desulphurisation plant (2) with process or cooling water,
wherein the cycle cooling water excess generated by condensing from the flue gas is supplied cooled to the cooling water cycle (15) located downstream of the cooling tower (16), and from the cooling water cycle (15) supplied by the water reservoir (23) during times of cooler ambient temperatures depending on a operating mode selected from relevant alternatively adjustable operating modes of the flue gas treatment plant (1), in which the flue gas treatment plant (1) is operated in dependence on the season and/or the time of day depending on the ambient temperature available for cooling, and stored in the water reservoir (23) and/or the cooling water cooled in the cooling tower (16) is supplied to the cooling water cycle (15) of the flue gas desulphurisation plant (2) and the flue gas cooler (3), and the cooling cycle (15) is additionally supplied with stored cycle cooling water taken from the water reservoir (23), which is supplied to the flue gas desulphurisation plant (2) and/or the flue gas cooler (3) as cooling or process water during times of warmer ambient temperatures.

5. Flue gas treatment method according to claim 4, **characterised in that** the desulphurised flue gas is supplied to the flue gas cooler (3) in a first operating mode of the alternative operating modes, and heated cooling cycle water is supplied from the flue gas cooler (3) to the cooling tower (16) and supplied to the flue gas desulphurisation plant (2) and the flue gas cooler (3) and the water reservoir (23) as cooled cooling or process water.

6. Flue gas treatment method according to claim 4, **characterised in that** the desulphurised flue gas is supplied to the flue gas cooler (3) in a second operating mode of the alternative operating modes, and heated cooling cycle water is supplied from the flue gas cooler (3) to the cooling tower (16) and supplied to the flue gas desulphurisation plant (2) and/or the flue gas cooler (3) as cooled cooling or process water.

7. Flue gas treatment method according to claim 4, **characterised in that** the desulpherised flue gas is supplied to the flue gas cooler (3) in a third operating mode of the alternative operating modes, and heated cooling cycle water is supplied from the flue gas cooler (3) to the cooling tower (16) and supplied to the flue gas desulphurisation plant (2) and/or the flue gas cooler (3) as cooled cooling or process water, and **in that** stored cycle cooling water is taken from the water reservoir (23) and supplied to the flue gas desulphurisation plant (2) and/or the flue gas cooler (3).

8. Flue gas treatment method according to claim 4, **characterised in that** the desulphurised flue gas is supplied to flue gas outlet line (7) that does not lead to the flue gas cooler (3) in a fourth operating mode of the alternative operating modes in the presence of temperatures that are so high that the cooling of cycle water in the cooling tower (16) is not possible, and **in that** cycle cooling water stored in the water reservoir (23) is taken and supplied to the flue gas desulphurisation plant (2) as cooling or process water.

## Revendications

1. Installation de traitement de gaz de combustion (1) comprenant une installation de désulfuration de gaz de combustion (2) ayant un refroidisseur de gaz de combustion (3) qui lui est adjoint, monté en aval par rapport à l'amenée de gaz de combustion de l'installation de désulfuration de gaz de combustion (2) et réalisé en tant que dispositif de lavage par pulvérisation, qui peut être amené (4) dans une liaison par conduite (5, 6) avec l'installation de désulfuration de gaz de combustion (2) transportant des gaz de combustion désulfurés et qui présente un circuit d'eau de refroidissement (15) qui y est raccordé, dans laquelle l'eau de procédé ou de refroidissement du circuit d'eau de refroidissement (15) peut être mise en contact avec les gaz de combustion circulant à travers le refroidisseur de gaz de combustion (3),
un excédent d'eau du circuit généré par la condensation à partir des gaz de combustion peut être stocké, refroidi, dans un réservoir d'eau (23) alimenté à partir du circuit d'eau de refroidissement (15), qui peut être amené dans une liaison par conduite (24, 26, 27) avec le circuit d'eau de refroidissement (15) et l'installation de désulfuration de gaz de combustion (2) fournissant de l'eau de procédé et/ou de refroidissement,
une tour de refroidissement (16) est agencée dans le circuit d'eau de refroidissement (15), et
le circuit d'eau de refroidissement (15) peut être amené dans une liaison par conduite (26, 27) avec l'installation de désulfuration de gaz de combustion (2),
**caractérisée**
**en ce que** la tour de refroidissement (16) présente un refroidissement à air avec un transfert thermique indirect vers l'eau du circuit de refroidissement et le réservoir d'eau (23) est agencé en aval de la tour de refroidissement (16),
**en ce que** dans la liaison par conduite (26, 27) est réalisée une première distribution d'eau de refroidissement réglable (20) de l'eau de refroidissement du circuit, qui peut distribuer l'eau de refroidissement du circuit provenant de la tour de refroidissement, en fonction d'un mode de service choisi parmi des modes de service de l'installation de traitement de gaz de combustion (1) pouvant être activés de façon alternative, dans lesquels l'installation de traitement de gaz de combustion (1) est exploitée en fonction de la température ambiante disponible pour le refroidissement selon la période de l'année et/ou le moment de la journée, dans une conduite d'alimentation du réservoir d'eau (22) menant dans le réservoir d'eau (23) et/ou dans la liaison par conduite (26, 27) menant vers l'installation de désulfuration de gaz de combustion (2) et/ou dans une conduite de liaison (21, 26) en liaison par conduite avec le refroidisseur de gaz de combustion (3),
et **en ce que** dans la liaison par conduite (26, 27) est réalisée une deuxième distribution d'eau de refroidissement réglable (25), qui peut distribuer l'eau de refroidissement provenant d'une conduite de prélèvement du réservoir d'eau (24) en liaison par conduite avec le réservoir d'eau (23), en fonction d'un mode de service choisi parmi des modes de service de l'installation de traitement de gaz de combustion (1) pouvant être activés de façon alternative, dans lesquels l'installation de traitement de gaz de combustion (1) est exploitée en fonction de la température ambiante disponible pour le refroidissement selon la période de l'année et/ou le moment de la journée, dans la conduite d'amenée d'eau de refroidissement ou d'eau de procédé (27) menant vers l'installation de désulfuration de gaz de combustion (2) et/ou dans la conduite de liaison (26) en liaison par conduite avec le refroidisseur de gaz de combustion (3).

2. Installation de traitement de gaz de combustion (1) selon la revendication 1, **caractérisée en ce que** dans la liaison par conduite (5, 6) transportant des gaz de combustion désulfurés est réalisée une distribution de gaz de combustion réglable (4), qui distribue les gaz de combustion dans une conduite d'amenée de gaz de combustion (6) menant vers le refroidisseur de gaz de combustion (3) et/ou dans une conduite d'évacuation de gaz de combustion (7) ne menant pas vers le refroidisseur de gaz de combustion (3).

3. Installation de traitement de gaz de combustion (1) selon la revendication 1 ou 2, **caractérisée en ce qu'**elle ne présente pas d'alimentation d'eau de procédé et/ou d'eau de traitement extérieure ou supplémentaire.

4. Procédé de traitement de gaz de combustion, dans lequel des gaz de combustion sont traités au moyen d'une installation de traitement de gaz de combustion (1) selon l'une des revendications 1 à 3,
dans lequel les gaz de combustion sont désulfurés dans l'installation de désulfuration de gaz de combustion (2) avec l'ajout d'eau de procédé et sont ensuite amenés au refroidisseur de gaz de combustion réalisé en tant que dispositif de lavage par pulvérisation ou sont ensuite refroidis dans le refroidisseur de gaz de combustion (3) réalisé en tant que dispositif de lavage par pulvérisation au moyen d'eau de refroidissement,
l'eau de refroidissement étant refroidie indirectement dans un circuit d'eau de refroidissement (15), qui est en liaison par conduite (26, 27) avec l'installation de désulfuration de gaz de combustion (2) et le refroidisseur de gaz de combustion (3), au moyen d'une tour de refroidissement (16) agencée dans le circuit de refroidissement (15) par le biais d'air de refroidissement circulant de bas en haut dans le sens opposé et étant amenée au refroidisseur de gaz de combustion (3) et/ou à l'installation de désulfuration de gaz de refroidissement (2), l'eau de procédé ou de refroidissement entrant en contact avec les gaz de combustion circulant à travers le refroidisseur de gaz de combustion (3) et un excédent d'eau de refroidissement du circuit généré par la condensation à partir des gaz de combustion étant stocké, refroidi, dans un réservoir d'eau (23) qui peut être amené dans une liaison par conduite (24, 26, 27) avec le circuit d'eau de refroidissement (15) et l'installation de désulfuration de gaz de combustion (2) fournissant de l'eau de procédé et/ou de refroidissement, étant entendu qu'en fonction d'un mode de service choisi parmi des modes de service de l'installation de traitement de gaz de combustion (1) pouvant être activés de façon alternative, dans lesquels l'installation de traitement de gaz de combustion (1) est exploitée en fonction de la température ambiante disponible pour le refroidissement selon la période de l'année et/ou le moment de la journée, dans des périodes de températures ambiantes plus froides, l'excédent d'eau de refroidissement du circuit généré par la condensation à partir des gaz de combustion est amené, refroidi, au réservoir d'eau (23) agencé en aval de la tour de refroidissement (16) dans le circuit d'eau de refroidissement (15) et alimenté à partir du circuit d'eau de refroidissement (15) et stocké dans le réservoir d'eau (23) et/ou l'eau de refroidissement du circuit de refroidissement (15) refroidie dans la tour de refroidissement (16) est amenée à l'installation de désulfuration de gaz de combustion (2) et au refroidisseur de gaz de combustion (3), et dans des périodes de températures ambiantes plus chaudes, le circuit de refroidissement (15) est alimenté en supplément avec de l'eau de refroidissement du circuit stockée prélevée à partir du réservoir d'eau (23), qui est amenée à l'installation de désulfuration de gaz de combustion (2) et/ou au refroidisseur de gaz de combustion (3) en tant qu'eau de refroidissement ou de procédé.

5. Procédé de traitement de gaz de combustion selon la revendication 4, **caractérisé en ce que** dans un premier mode de service des modes de service alternatifs, les gaz de combustion désulfurés sont amenés au refroidisseur de gaz de combustion (3) et l'eau du circuit de refroidissement réchauffée provenant du refroidisseur de gaz de combustion (3) est amenée à la tour de refroidissement (16) et amenée, en tant qu'eau de refroidissement ou de procédé refroidie, à l'installation de désulfuration de gaz de combustion (2), au refroidisseur de gaz de combustion (3) et au réservoir d'eau (23).

6. Procédé de traitement de gaz de combustion selon la revendication 4, **caractérisé en ce que** dans un deuxième mode de service des modes de service alternatifs, les gaz de combustion désulfurés sont amenés au refroidisseur de gaz de combustion (3) et l'eau du circuit de refroidissement réchauffée provenant du refroidisseur de gaz de combustion (3) est amenée à la tour de refroidissement (16) et amenée, en tant qu'eau de refroidissement ou de procédé refroidie, à l'installation de désulfuration de gaz de combustion (2) et/ou au refroidisseur de gaz de combustion (3).

7. Procédé de traitement de gaz de combustion selon la revendication 4, **caractérisé en ce que** dans un troisième mode de service des modes de service alternatifs, les gaz de combustion désulfurés sont amenés au refroidisseur de gaz de combustion (3) et l'eau du circuit de refroidissement réchauffée provenant du refroidisseur de gaz de combustion (3) est amenée à la tour de refroidissement (16) et amenée, en tant qu'eau de refroidissement ou de procédé refroidie, à l'installation de désulfuration de gaz de combustion (2) et/ou au refroidisseur de gaz de combustion (3), et en plus, de l'eau de refroidissement stockée est prélevée à partir du réservoir d'eau (23) et amenée à l'installation de désulfuration de gaz de combustion (2) et/ou au refroidisseur de gaz de combustion (3).

8. Procédé de traitement de gaz de combustion selon la revendication 4, **caractérisé en ce que** dans le cas de températures si élevées qu'un refroidissement de l'eau du circuit dans la tour de refroidissement (16) n'est pas possible, dans un quatrième mode de service des modes de service alternatifs, les gaz de combustion désulfurés sont amenés à une conduite d'évacuation de gaz de combustion (7) ne menant pas vers le refroidisseur de gaz de combustion (3) et de l'eau de refroidissement stockée est prélevée à partir du réservoir d'eau (23) et amenée à l'installation de désulfuration de gaz de combustion (2) en tant qu'eau de refroidissement ou de procédé.
